# FASCICULE DE BREVET EUROPEEN

(11) **EP 1 729 586 B1**
(45) Date de publication et mention de la délivrance du brevet: **27.03.2013**
(21) Numéro de dépôt: 05729281.5
(22) Date de dépôt: 31.03.2005
(51) Int. Cl.: A21D 8/04, A21D 2/22, A21D 2/02

(54) **AMELIORANT DE PANIFICATION**
BACKMITTEL
BREAD IMPROVER

(30) Priorité: 31.03.2004 EP 04007791
(43) Date de publication de la demande: 13.12.2006
(73) Titulaire: Lesaffre et Compagnie, 75001 Paris (FR)
(72) Inventeur: JULIEN, Pascal, F-59700 Marcq-en-Baroeul (FR); LEJEUNE-LUQUET, Marie-Pierre, F-59200 Tourcoing (FR); SCHUBERT, Eric, F-94410 Saint-Maurice (FR)
(74) Mandataire: Cabinet Plasseraud
(86) Numéro de dépôt international: PCT/EP2005/003377
(87) Numéro de publication internationale: WO 2005/104856

(56) Documents cités:
- EP-A- 0 943 242
- EP-A- 1 008 309
- WO-A-02/19828
- WO-A2-2004/105494
- FR-A- 2 315 852
- RU-C- 2 158 513
- US-A- 3 650 764
- US-A- 4 642 237

## Description

La présente invention concerne un améliorant de panification contenant au moins une enzyme.

L'utilisation d'améliorants de panification à activité(s) enzymatique(s) est connue depuis longue date.

En particulier, il est connu d'utiliser de tels améliorants enzymatiques sous forme de poudre. Ils présentent un certain nombre d'inconvénients. Les améliorants enzymatiques pulvérulents ont tendance à se disperser dans l'air et à se déposer partout dans la boulangerie. Ceci nécessite non seulement un nettoyage régulier de l'atelier, mais peut également causer des réactions allergiques chez les ouvriers. Les poudres sont également difficiles à doser de manière automatisée.

Ces problèmes ne sont résolus que partiellement par l'utilisation d'améliorants enzymatiques sous forme de granules.

Des améliorants enzymatiques solides et fluides sont notamment connus du brevet US3 650 764-A et de la demande de brevet FR2 315 852-A. Des améliorants granulaires sont notamment décrits dans les demandes de brevets EP1 008 309-A1 et EP0 943 242-A1. Le brevet US4 642 237-A propose également le conditionnement d'améliorants solides de panification sous forme de tablettes ou de cachets.

Il a également été proposé d'utiliser des améliorants enzymatiques liquides. Ces améliorants liquides présentent, en effet, l'avantage de ne pas se disperser dans l'air et de limiter ainsi le risque de réactions allergiques chez les ouvriers. Les améliorants liquides permettent également un dosage automatisé, à condition que ledit améliorant liquide soit homogène au moment du dosage. Cependant, les améliorants liquides sont le plus souvent formulés avec des ingrédients gras liquides ou avec des polyols, qui ne sont pas autorisés dans certaines formules de panification et/ou dans certains pays. De plus, la présence de matières grasses n'est pas toujours appréciée par les consommateurs de nos jours.

Les améliorants liquides présentent également le désavantage que leur transport est coûteux du fait qu'on doit transporter des volumes nettement plus importants, étant donné que les ingrédients actifs sont dilués dans la phase liquide. Etant donné leur volume plus élevé, les améliorants liquides nécessitent en général des conteneurs de transport hygiéniques plus chers et plus encombrants, ce qui est en particulier le cas pour de tels conteneurs rigides. Ceci oblige le boulanger à réserver une partie non-négligeable de son atelier pour le stockage de conteneurs vides. En outre, dans un nombre croissant de pays, ce type d'emballage est soit récupéré par le fournisseur de l'améliorant lorsqu'il est consigné, soit assujetti à une taxe dite « écologique ».

La présente invention propose un procédé de préparation dans la boulangerie d'un améliorant liquide de panification, ledit procédé comprenant la dispersion d'un améliorant solide de panification particulier contenant au moins une enzyme. Un tel procédé permet de combiner les avantages des deux types d'améliorants enzymatiques décrits ci-dessus.

A cette fin, la présente invention propose un améliorant solide à activité enzymatique ayant une composition spécifiquement conçue pour permettre au boulanger de réaliser, dans sa boulangerie, un améliorant liquide de bonne qualité par simple dispersion dans une phase aqueuse dudit améliorant solide.

La présente invention a notamment pour objet un procédé de préparation dans la boulangerie d'un améliorant liquide de panification, ledit procédé comprenant la dispersion, dans une phase liquide aqueuse, de préférence de l'eau, d'un améliorant solide de panification, ledit améliorant solide :
● ayant une teneur en matières sèches supérieure ou égale à 80% en masse, lesdites matières sèches consistant essentiellement en un ou plusieurs ingrédients alimentaires hydrosolubles et au moins une enzyme ;
● contenant de l'acide ascorbique;
● donnant après dispersion dans 100 parties en poids d'eau distillée de 10 parties en poids de l'améliorant solide, un liquide ayant un pH de 3,8 à 7,0 ; de préférence de 4,0 à 6,5 ; encore de préférence de 4,5 à 6,3 ; et plus préférentiellement encore de 5,0 à 6,0.

Selon l'invention, les matières sèches de l'améliorant solide de panification consistent essentiellement, c'est-à-dire pour au moins 80% en masse, en un ou plusieurs ingrédients alimentaires hydrosolubles et au moins une enzyme. De préférence, les matières sèches de l'améliorant consistent pour au moins 90% en masse, de préférence pour au moins 95% en masse, préférentiellement pour au moins 97% en masse et encore de préférence pour au moins 99% en masse d'une ou plusieurs enzymes et d'un ou plusieurs ingrédients alimentaires hydrosolubles.

Dans le présent contexte, on comprend par « ingrédient hydrosoluble », un ingrédient qui présente une capacité à se dissoudre totalement dans l'eau distillée à 10°C, et de préférence aussi à 2°C, à une teneur en masse par rapport à l'eau distillée au moins aussi importante que celle à laquelle il se trouvera dans l'améliorant liquide obtenu selon la présente invention à partir de l'améliorant solide; et dont les solutions aqueuses restent stables sans agitation, pendant au moins 24 heures, de préférence pendant au moins 48 heures. De préférence, un « ingrédient hydrosoluble » est un ingrédient qui a la capacité de se dissoudre dans l'eau potable à une température entre +1 °C et +20°C, à une teneur en masse par rapport à la quantité d'eau potable, d'au moins 1%, de préférence d'au moins 5%, et encore de préférence d'au moins 20%, l'eau potable étant définie par la directive 98/83/CE du Conseil du 3 novembre 1998. De tels ingrédients hydrosolubles sont, par exemple, les sels alimentaires qui se dissolvent dans l'eau. La farine de blé est quant à elle un exemple d'un ingrédient non-hydrosoluble.

Il va de soi que les ingrédients de l'améliorant solide de panification sont choisis parmi les ingrédients appropriés pour la panification.

Selon l'invention, l'améliorant solide de panification contient en particulier l'antioxydant acide ascorbique en tant qu'ingrédient alimentaire hydrosoluble, étant rappelé que l'acide ascorbique est immédiatement oxydé dans la pâte et a ensuite un rôle d'oxydant de la pâte.

Selon l'invention l'améliorant solide de panification présente une teneur en matières sèches d'au moins 80% en masse. L'améliorant solide peut en particulier présenter une teneur en matières sèches d'au moins 90% en masse, de préférence d'au moins 95% en masse et encore de préférence d'au moins 97% en masse.

Selon l'invention, les ingrédients alimentaires hydrosolubles de l'améliorant solide, leurs concentrations et leurs rapports sont choisis de manière à ce qu'après dispersion dans 100 parties en poids d'eau distillée de 10 parties en poids de l'améliorant solide, le liquide obtenu possède un pH de 3,8 à 7,0 ; de préférence de 4,0 à 6,5; encore de préférence de 4,5 à 6,3 ; et plus préférentiellement encore de 5,0 à 6,0.

Comme indiqué ci-dessus, selon l'invention, l'améliorant solide de panification permet au boulanger de réaliser, dans la boulangerie, un améliorant liquide enzymatique par dispersion de l'améliorant solide dans une phase aqueuse. Il est évident que le boulanger n'utilisera normalement pas de l'eau distillée pour réaliser l'améliorant liquide. En général, le boulanger réalisera l'améliorant liquide en dispersant l'améliorant solide dans une partie de l'eau de coulage de la pâte. Dans le contexte de la présente description de l'invention, certaines caractéristiques de l'améliorant solide ont toutefois été définies sur la base d'un test comprenant la dispersion de 10 parties en poids de l'améliorant solide dans 100 parties en poids d'eau distillée afin d'assurer la reproductibilité du test.

Le terme boulangerie dans le contexte de la présente invention, désigne toute boulangerie comme notamment la boulangerie industrielle et artisanale.

Selon l'invention, l'améliorant solide contient de préférence un ou plusieurs ingrédients tampons alimentaires hydrosolubles, les ingrédients tampons correspondants selon la définition donnée dans le Rômpp Lexikon Chemie (10ème édition, 1999, Band 5 (ISBN 3-13-735010-7), page 3618) à :
● des sels d'un acide faible avec une base forte,
● des sels d'un acide fort avec une base faible,
● des combinaisons d'un acide faible avec au moins un de ses sels.

De préférence, les ingrédients tampons sont choisis dans la famille des sels d'un acide faible avec une base forte.

De préférence, les ingrédients de l'améliorant solide, et en particulier ses ingrédients alimentaires hydrosolubles, tels que les ingrédients tampons, leurs concentrations et leurs rapports sont choisis de manière à ce qu'après la dispersion de 10 parties en poids d'améliorant solide dans 100 parties en poids d'eau distillée, on obtient un liquide possédant un pouvoir tampon tel qu'un ajout de 1 ml d'HCl 1 N à 110g dudit liquide donne une variation de pH (en valeur absolue) inférieure ou égale à 0,50 ; de préférence inférieure ou égale à 0,20 ; encore de préférence inférieure ou égale à 0,10 ; et encore plus de préférence inférieure ou égale à 0,08.

De préférence, l'améliorant solide de panification possède au moins l'une des caractéristiques a, b, c et d suivantes, préférentiellement deux et encore de préférence trois des caractéristiques a, b, c et d suivantes:
a) une teneur en matières sèches supérieure ou égale à 90% en masse, de préférence supérieure ou égale à 95% en masse et encore de préférence supérieure ou égale à 97% en masse;
b) les matières sèches consistent pour au moins 90% en masse, de préférence pour au moins 95% en masse, de préférence pour au moins 97% en masse, encore de préférence pour au moins 99% en masse d'une ou plusieurs enzymes et d'un ou plusieurs ingrédient(s) hydrosoluble(s) ;
c) contient au moins un ingrédient alimentaire hydrosoluble choisi dans le groupe des ingrédients tampons, les ingrédients tampons étant définis comme :
   ● les sels d'un acide faible avec une base forte,
   ● les sels d'un acide fort avec une base faible, et
   ● les combinaisons d'un acide faible avec au moins un de ses sels.
d) 10 parties en poids dudit améliorant solide dispersées dans 100 parties en poids d'eau distillée donnent un liquide ayant un pouvoir tampon tel qu'un ajout de 1 ml d'HCl 1 N à 110 g dudit liquide donne une variation de pH inférieure ou égale à 0,50 ; de préférence inférieure ou égale à 0,20 ; encore de préférence inférieure ou égale à 0,10; et encore plus de préférence inférieure ou égale à 0,08.

Ainsi, l'améliorant solide de panification peut présenter une des combinaisons desdites caractéristiques suivantes: a et b ; a et c ; a et d ; b et c ; b et d, c et d ; et encore de préférence a, b et c ; b, c et d ; a, c et d ; ou d, a et b.

De préférence, l'améliorant solide de panification possède les quatre caractéristiques a, b, c, et d précitées.

Selon l'invention, l'améliorant solide de panification permet notamment de réaliser après dispersion dans une phase aqueuse, de préférence de l'eau, un améliorant liquide enzymatique pouvant être conservé pendant au moins 24 heures à une température de moins de 10°C, de préférence pendant 48 heures, et ceci sans perte significative de son efficacité en tant qu'améliorant de panification. De manière préférentielle, l'améliorant liquide est préparé en « batch », c'est-à-dire en une quantité finie formant un lot unique destiné à être utilisé pour la préparation d'un certain nombre ou d'une certaine quantité de pâtes. Après quoi, un autre batch ou lot est préparé. Chaque lot peut alors être utilisé pendant une durée de 24 heures et de préférence de 48 heures pour la réalisation de pâte ou de produits cuits de boulangerie. Ce lot est préférentiellement conservé à moins de 10°C entre sa préparation et son incorporation dans une pâte.

Cette préparation dite en « batch » permet ainsi au boulanger de préparer en une fois la quantité d'améliorant liquide enzymatique correspondant à son besoin pour les 24 heures, voire les 48 heures suivantes, à partir d'un améliorant solide sous forme pulvérulente ou, de préférence sous forme de granules ou de comprimés apportant de manière concentrée les oxydants, éventuellement les réducteurs, et les enzymes nécessaires à sa panification.

Le boulanger peut ainsi éviter les inconvénients de l'achat d'un améliorant liquide, tout en profitant de leurs avantages, et notamment de leur facilité de dosage, et en limitant à un minimum la formation de poussière liée à l'utilisation d'un améliorant enzymatique solide.

Comme indiqué précédemment, le boulanger dispersera typiquement l'améliorant solide dans tout ou partie de l'eau de coulage de la pâte, en général une faible partie de l'eau de coulage de la pâte. Le boulanger peut aussi disperser l'améliorant solide dans tout ingrédient liquide de sa recette comportant une phase aqueuse, comme de la crème de levure, du lait,....

Selon l'invention, l'améliorant solide de panification peut contenir un ou plusieurs ingrédients alimentaires hydrosolubles appartenant au groupe des acétates et des lactates, ces deux sels étant couramment utilisés et autorisés en panification courante. D'autres ingrédients appropriés sont les sels alimentaires hydrosolubles appartenant à la familles des fumarates, des malates, des citrates, des propionates, des phosphates, des carbonates utilisés dans certains pays (Etats-Unis par exemple) ou dans des panifications spéciales (pain de seigle par exemple). Il est rappelé que les sels de sodium et de potassium sont en général plus solubles que les sels de calcium. Les sels alimentaires sont, par définition, tous les sels autorisés comme additifs dans l'Union Européenne (directive du Parlement européen et du Conseil N° 95/2 CE) ou aux Etats-Unis d'Amérique (Code of Federal Régulation 21 - Food and Drug). Préférentiellement, l'améliorant solide contient un ou plusieurs ingrédients alimentaires hydrosolubles appartenant au groupe des lactates, acétates et citrates.

De préférence, l'améliorant solide de panification contient de l'acétate de calcium et/ou du lactate de calcium. Des résultats très positifs, présentant notamment un effet tampon élevé, ont été obtenus avec de l'acétate de calcium, comme notamment l'acétate de calcium anhydre et l'acétate de calcium ayant un "taux d'humidité " (eau d'hydratation) inférieur ou égal à 10,2%, et de préférence inférieur ou égal à 5,0%, en tant qu'ingrédient hydrosoluble.

Lorsque l'améliorant solide contient des ascorbates, ceux-ci ont un rôle à la fois d'ingrédients tampons et d'oxydants des farines, et ils peuvent remplacer totalement ou partiellement l'acide ascorbique. Selon l'invention, l'améliorant solide contient de l'acide ascorbique et/ou des ascorbates, dans une quantité exprimée en équivalent acide ascorbique ayant le pouvoir oxydant requis pour la panification. Dans la présente description à l'exception des exemples, et dans les revendications, l'expression « acide ascorbique » englobe toute composition consistant en de l'acide ascorbique et/ou des ascorbates, ayant en équivalent acide ascorbique, le pouvoir oxydant des pâtes requis dans la formule, étant entendu que les formes les plus préférées de réalisation de l'invention sont réalisées avec de l'acide ascorbique, au sens strict, c'est-à-dire sous la forme acide, comme décrit dans les exemples.

Suivant une forme de réalisation selon l'invention, l'améliorant solide de panification comprend au moins une enzyme choisie dans le groupe des amylases, des hémicellulases, des glucose oxydases, des amyloglucosidases, des lipases, des phospholipases, des sulfhydryle oxydases, des protéases et des peroxydases ; de préférence, il comprend une combinaison desdites enzymes. De manière utile, l'améliorant comprend au moins une alpha-amylase choisie dans le groupe des alpha-amylases fongiques et bactériennes ou une combinaison desdites alpha-amylases, en particulier l'améliorant peut comprendre une alpha-amylase anti-rassissante, comme par exemple une alpha-amylase maltogène. L'améliorant solide peut contenir une combinaison d'au moins une alpha-amylase avec au moins une hémicellulase. Il contient avantageusement de 0,5 à 3,0% en masse d'alpha-amylase(s) et de 1,0 à 30,0% en masse d'hémicellulase(s), de préférence de 1,0 à 2,0% en masse d'alpha-amylase(s) et de 1,2 à 15,0% en masse d'hémicellulase(s). De préférence, ladite hémicellulase est une xylanase ou un mélange de xylanases.

De manière utile, l'améliorant solide peut contenir, en particulier en plus de la combinaison d'une ou plusieurs alpha-amylase(s) et d'une ou plusieurs hémicellulase(s) ci-dessus, une quantité d'une ou plusieurs glucose oxydase(s) et/ou une quantité d'une ou plusieurs phospholipase(s) ayant le même effet technologique qu'un ajout d'esters diacétyl tartriques de mono et diglycérides d'acides gras (émulsifiants E472e) réalisé à une dose comprise entre 0,05% et 0,30% en masse par rapport à 100 parties en masse de farine (pourcentage du boulanger).

De manière utile, l'améliorant solide contient de 2 à 30% en masse d'acide ascorbique, de préférence de 5 à 20% en masse, et encore de préférence de 7 à 15% en masse.

L'améliorant peut également comprendre d'autres ingrédients alimentaires hydrosolubles, et en particulier de tels ingrédients alimentaires hydrosolubles utilisés en boulangerie et notamment ceux qui ont un effet d'améliorant de panification. Des exemples d'un tel ingrédient alimentaire hydrosoluble sont le monochlorhydrate de L-cystéïne et/ou le chlorure de sodium. De manière préférentielle, l'améliorant solide selon l'invention comprendra tous les oxydants ajoutés à la pâte, éventuellement tous les réducteurs ajoutés à la pâte, toutes les préparations enzymatiques ajoutées nécessaires au type de panification envisagée, quel que soit le procédé, pour la fabrication de pains, de viennoiseries, de brioches, et de manière générale de toute pâte fermentée.

Selon l'invention, l'améliorant solide peut-être pulvérulent ou non-pulvérulent. Selon un mode particulièrement avantageux, l'améliorant sera sous une forme non-pulvérulente, préférentiellement sous forme granulaire ou sous forme de comprimé, notamment comprimé sécable, préférentiellement à dissolution rapide dans l'eau, tel que comprimé effervescent.

L'améliorant solide sous forme de comprimé ou sous forme granulaire présente l'avantage de réduire le risque de libération de particules fines dans l'air ambiant lors de sa manipulation dans la boulangerie. Ces formes, en effet moins poussiéreuses, ont moins tendance à se disperser dans l'air.

Dans le cadre de la présente invention, on entend par comprimé, une masse solide compacte d'améliorant solide de forme quelconque obtenue par compression.

L'améliorant solide est avantageusement sous forme de granules ou de microgranules. Le diamètre moyen des microgranules ou granules de l'améliorant varie de préférence de 50 µm à 1000 µm, encore de préférence de 80 µm à 700 µm et encore de préférence de 80 µm à 300 µm. Suivant un mode particulier de réalisation, le diamètre moyen des particules de l'améliorant sera entre 50 µm et 300 µm, encore de préférence entre 80 µm et 150 µm et encore de préférence entre 80 µm et 120 µm.

De manière avantageuse, la quantité de particules fines ayant un diamètre inférieur à 50 µm correspond à moins de 30% en masse, de préférence à moins de 15% et encore de préférence à moins de 5% en masse de l'améliorant solide.

Dans le cadre de la présente invention, on désigne par « particules fines ou poudre», les particules de l'améliorant solide ayant un diamètre inférieur à 50 µm.

De manière avantageuse, l'améliorant solide de panification utile selon l'invention est conditionné pour son stockage et transport dans un contenant hermétique, afin d'améliorer sa conservation et surtout d'éviter, lors de la manipulation de l'améliorant, toute libération de particules fines dans l'air ambiant. L'améliorant est ainsi préférentiellement conditionné dans des sacs, pochettes ou sachets hermétiques, conteneurs divers sous vide ou sous atmosphère sèche artificielle, comme par exemple sous atmosphère d'azote. Suivant une forme particulière de mise en oeuvre, l'améliorant solide de panification est conditionné dans un emballage réalisé en matières hydrosolubles alimentaires pouvant être intégré dans la pâte, telles que certaines matières à base cellulosique, de manière à ce que l'améliorant liquide de panification puisse être réalisé par dispersion, dans une phase liquide aqueuse, de l'améliorant solide y compris de son emballage hydrosoluble.

Selon un mode préférentiel de mise en oeuvre du procédé de préparation de l'améliorant liquide de panification selon l'invention, on utilise pour la dispersion de l'améliorant solide dans la phase aqueuse, un système hermétique de manière à éviter toute libération de particules fines dans l'air ambiant. Ainsi, si l'améliorant solide doit, par exemple, être transvasé de son contenant vers un conteneur pour sa dispersion en phase aqueuse, le système hermétique approprié peut être muni de moyens bloquant la libération de particules fines dans l'air ambiant, comme par exemple des valves anti-retour dans les connexions et/ou un moyen d'aspiration, notamment créant une dépression, dans le conteneur de dispersion.

La présente invention a également pour objet l'améliorant solide de panification précédemment défini, dans les différentes formes de réalisation décrites. Un tel améliorant solide selon l'invention présente l'avantage important de se disperser aisément dans une phase liquide aqueuse, de manière à obtenir un améliorant liquide, permettant ainsi au boulanger de bénéficier des avantages des améliorants liquides, tout en se procurant un améliorant solide plus compact. L'invention concerne notamment l'améliorant solide conditionné dans un emballage hydrosoluble alimentaire pouvant être intégré dans la pâte.

Comme précédemment indiqué, l'améliorant solide se caractérise notamment par sa propriété à donner un liquide de pH 3,8 à 7,0 ; de préférence 4,0 à 6,5 ; et encore de préférence de 4,5 à 6,3 et encore préférentiellement de 5,0 à 6,0 ; lorsqu'il est mis en suspension dans de l'eau distillée à raison de 10 parties d'améliorant dans 100 parties en poids d'eau.

Un améliorant liquide de panification peut être obtenu par mise en suspension de l'améliorant solide prédéfini selon le procédé objet de l'invention. Comme précédemment indiqué, ledit améliorant liquide présente l'avantage de pouvoir être utilisé sans perte significative de son efficacité en tant qu'améliorant de panification, pendant une durée d'au moins 24 heures, et de préférence de 48 heures suivant sa préparation, notamment lorsqu'il est conservé à une température de moins de 10°C entre sa préparation et son incorporation dans une

La présente invention permet également l'utilisation dans la boulangerie d'un améliorant liquide de panification pour la préparation de produit cuit de boulangerie ou d'une pâte pour produit cuit de boulangerie, ledit améliorant liquide de panification étant obtenu par le procédé de préparation selon l'invention, donc par dispersion dudit améliorant solide tel que défini ci-dessus, dans une phase liquide aqueuse, de préférence de l'eau, c'est-à-dire dans au moins une partie de l'eau de coulage de la pâte. L'améliorant liquide ainsi obtenu est alors incorporé dans la pâte.

L'invention concerne aussi l'utilisation dans la boulangerie d'un tel améliorant solide dans la préparation de produit cuit de boulangerie ou d'une pâte pour produit cuit de boulangerie, ladite utilisation comprenant l'obtention d'un améliorant liquide par le procédé de préparation selon l'invention, donc par dispersion dudit améliorant solide dans une phase liquide aqueuse, de préférence de l'eau, c'est-à-dire dans au moins une partie de l'eau de coulage de la pâte. L'améliorant liquide ainsi obtenu est alors incorporé dans la pâte. La pâte, qui contient typiquement de la levure de boulangerie en tant qu'agent de fermentation, est par exemple une pâte à pain, une pâte pour brioche ou une pâte pour viennoiserie.

Une telle utilisation de l'améliorant solide peut permettre de réduire le nombre d'ingrédients que le boulanger doit doser séparément. Ce résultat peut être obtenu du fait que l'améliorant solide contient plusieurs ingrédients de la pâte et/ou en réalisant l'améliorant liquide par combinaison de l'améliorant solide avec un ou plusieurs autres ingrédients de la formulation panaire.

Selon l'invention, l'améliorant liquide est, de préférence, incorporé dans la pâte en une quantité correspondant à un pourcentage du boulanger de l'améliorant solide de 0,01 à 1,00 ; de préférence de 0,05 à 0,50 ; encore de préférence de 0,08 à 0,25 ; c'est-à-dire de manière à obtenir dans la pâte, pour 100 kg de farine mise en oeuvre, de 0,01 à 1,00 kg ; de préférence de 0,05 à 0,50 kg et encore de préférence de 0,08 à 0,25 kg de l'améliorant solide. Le pourcentage du boulanger est un pourcentage en masse d'utilisation d'un ingrédient calculé par rapport à 100 parties en masse de la farine mise en oeuvre.

De préférence, l'améliorant solide est dispersé dans la phase aqueuse de manière à obtenir un améliorant liquide enzymatique contenant de 1 à 25 % en masse, de préférence de 3 à 20% en masse et encore de préférence de 6 à 12% en masse de l'améliorant solide.

Grâce à la composition spécifique de l'améliorant solide, le boulanger peut ainsi aisément préparer un améliorant liquide de panification dans la boulangerie. En préparant l'améliorant liquide en batch, c'est-à-dire, par exemple, en préparant en une fois, une quantité d'améliorant liquide suffisante pour plusieurs lots de pâte boulangère, voire en préparant, en une fois, une quantité d'améliorant liquide suffisante pour une journée ou plus, le boulanger peut limiter au minimum les inconvénients des améliorants solides.

L'invention concerne aussi un procédé pour la préparation d'une pâte pour produit cuit de boulangerie. Ce procédé selon l'invention comprend la dispersion, dans une phase liquide aqueuse, de préférence de l'eau, d'un améliorant solide selon l'invention, de manière à obtenir un améliorant liquide enzymatique, et l'incorporation d'une quantité dudit améliorant liquide dans la pâte. L'invention concerne également un procédé pour la préparation d'un produit cuit de boulangerie. Ce procédé comprenant, la dispersion dans une phase liquide aqueuse, de préférence de l'eau, d'un améliorant solide selon l'invention, de manière à obtenir un améliorant liquide enzymatique, l'incorporation d'une quantité dudit améliorant liquide dans la pâte, et la cuisson de la pâte obtenue.

Dans ces procédés selon l'invention, l'améliorant liquide est avantageusement incorporé dans la pâte en une quantité correspondant à un pourcentage du boulanger de l'améliorant solide de 0,01 à 1,00; de préférence de 0,05 à 0,50; encore de préférence de 0,08 à 0,25 ; c'est-à-dire de manière à obtenir dans la pâte, pour 100 kg de farine mise en oeuvre, de 0,01 à 1,00 kg ; de préférence de 0,05 à 0,50 kg et encore de préférence de 0,08 à 0,25 kg de l'améliorant solide.

De manière préférée, l'améliorant liquide contient de 1 à 25 % en masse, de préférence de 3 à 20% en masse et encore de préférence de 6 à 12% en masse de l'améliorant solide. De manière préférée, entre la dispersion de l'améliorant solide dans la phase liquide aqueuse et son incorporation dans la pâte, l'améliorant liquide est de préférence conservé à une température de 10°C ou moins, de préférence de 2°C à 4°C.

L'améliorant liquide peut être incorporé dans la pâte au moins jusqu'à 24 heures, de préférence au moins jusqu'à 48 heures suivant sa préparation par dispersion de l'améliorant solide dans la phase liquide aqueuse. La pâte dans laquelle l'améliorant liquide est incorporé peut contenir de la levure de boulangerie en tant qu'agent de fermentation. Dans ce cas, la pâte contenant la quantité de l'améliorant liquide est soumise à une étape de fermentation de la pâte par la levure de boulangerie.

La pâte peut être une pâte fermentée, de préférence choisie dans le groupe des pâtes à pain, pâtes pour brioche ou pâtes pour viennoiserie, de telles pâtes pouvant être utilisées dans le cadre des technologies boulangères du direct, du précuit ou du surgelé.

Selon l'invention, l'améliorant solide peut également être dispersé dans de la crème de levure, c'est-à-dire une suspension aqueuse de cellules de levure de boulangerie, avant son incorporation dans la pâte.

La pâte pour produit cuit peut notamment être préparée selon des procédés de panification directs dit « straight dough» ou indirects comme le procédé dit « Sponge and Dough » (« levain-levure » en français), le procédé « NO-TIME DOUGH » (« sans temps de fermentation de la pâte en masse » en français) ou par tout autre procédé de panification.

De préférence, l'améliorant solide selon l'invention et les procédés selon l'invention utilisant cet améliorant solide, sont respectivement des améliorants pour pains français et des procédés pour la fabrication de pains français, c'est-à-dire des pains ne contenant ni matière grasse ni sucre ajouté.

D'une manière plus générale, l'améliorant solide et les procédés selon l'invention utilisant cet améliorant solide sont utiles pour la réalisation de pâtes ou produits cuits de boulangerie, notamment pain de type français, de préférence pain courant français, c'est-à-dire pour pain ne contenant ni matière grasse ni sucre ajouté conforme aux usages français, pour la réalisation de viennoiseries, brioches, pains spéciaux, et en général, pour la réalisation de tous les pains de type non français comportant des matières grasses et/ou du sucre ajouté. Ainsi, l'améliorant solide et les procédés selon l'invention conviennent également pour la réalisation de pâte ou produits cuits tels que fabriqués par exemple aux Etats-Unis d'Amérique, c'est-à-dire contenant de préférence une quantité de sucre ajouté variant de 4 à 16% en matières sèches en pourcentages de boulanger, et/ou une quantité de matières grasses ajoutées, par exemple l'huile, variant de 2% à 6% en pourcentage de boulanger et notamment ceux obtenus par le procédé Sponge and Dough, ou No Time Dough.

### Exemples

L'améliorant solide de la présente invention peut de manière avantageuse être utilisé dans un grand nombre d'applications. Des exemples illustratifs de l'améliorant solide et ses applications sont donnés ci-dessous.

### Exemple 1 : Exemples de composition de l'améliorant solide

**Tableau 1**

| Composition | Améliorant 1: ex. de composition (% en masse) | Améliorant 2: ex. de composition (% ne masse) | Améliorant 3: ex. de composition (% en masse) |
|---|---|---|---|
| Acétate de calcium | 86,5 | 77,5 | 83,0 |
| Alpha-amylase | 1,0 | 1,0 | 2,0 |
| Acide ascorbique* | 10,0 | 10,0 | 10,0 |
| Hemicellulase | 2,5 | 2,5 | 3,0 |
| glucose oxydase | - | 4,5 | - |
| Phospholipase | - | 4,5 | - |
| Monochlorhydrate de L-cystéine | - | - | 2,0 |

| | | | |
|---|---|---|---|
| *L'acide ascorbique est de l'acide ascorbique au sens strict, c'est-à-dire, entièrement sous forme acide. | | | |

### Exemple 2 : Préparation de l'améliorant liquide enzymatique à partir de l'améliorant solide

100 g de chacun des 3 améliorants solides de l'exemple 1 sont dispersés dans 1 litre (=1000 g) d'eau distillée. La dispersion est réalisée sous agitation à l'aide d'un barreau aimanté (à l'échelle du laboratoire) ou d'une pâle (à l'échelle industrielle dans la boulangerie).

Le pH des 3 améliorants liquides ainsi obtenus et leurs pouvoirs tampon sont donnés dans le tableau 2 ci-après.

**Tableau 2**

| | Améliorant 1 | Améliorant 2 | Améliorant 3 |
|---|---|---|---|
| pH solution obtenue par dispersion à 10% | 5,56 | 5,60 | 5,48 |
| pH obtenu après ajout de 1 ml d'HCl 1 N à 110 g de la solution obtenue par dispersion à 10% | 5,49 | 5,52 | 5,42 |
| Δ pH(en valeur absolue) | 0,07 | 0,08 | 0,06 |

L'améliorant liquide ainsi obtenu peut être conservé sans agitation à 10°C pendant 24 ou 48 heures.

### Exemple 3 : Analyse de la solubilité et de la stabilité enzymatique de deux améliorants sur 48 heures

L'étude de la solubilité et de la stabilité enzymatique porte sur les améliorants hydrosolubles 1 et 2 tels que décrits dans l'exemple 1. Les améliorants solides sont dispersés dans l'eau distillée à raison de 100 g de poudre pour 1000 g d'eau distillée dans des éprouvettes de 1 litre.

La dispersion est réalisée sous agitation à l'aide d'un barreau aimanté pendant 15 minutes. Les deux solutions ainsi obtenues sont placées en chambre réfrigérée à 10°C pendant 48 heures.

Des prélèvements à la surface et au fond des éprouvettes sont réalisés à T=0 h, T=24 h et T= 48 h. Sur ces différents échantillons des dosages des activités enzymatiques contenues dans les améliorants ont été effectués.

Au cours des 48 heures de stockage, aucun gradient vertical d'activité enzymatique n'était observé dans les phases liquides.

### Exemple 4 : Exemple d'utilisation de l'améliorant liquide

La panification de type français au sens strict, c'est-à-dire les procédés de panification où la pâte ne contient ni matières grasses ni sucres ajoutés est très contraignante pour le boulanger, qui doit proposer du pain frais, venant d'être cuit dès 7 heures du matin, voire avant.

Une formule boulangère de panification pouvant être utilisée avec ledit améliorant est la suivante :

**Tableau 3**

| Formule boulangère | Pourcentage du boulanger | |
|---|---|---|
| | a | b |
| Farine de blé | 100,0 | 100,0 |
| Eau | 64,0 | 63,0 |
| Sel | 2,0 | 2,0 |
| Levure pressée | 2,0 | 2,0 |
| Améliorant solide en poudre | 0,1 | |
| Améliorant liquide à 10 parties en poids d'améliorant solide sur 100 parties en poids d'eau | | 1,1 |

Le diagramme de panification appliqué à la recette ci-dessus est le suivant :
1. Placer les ingrédients dans une cuve d'un pétrin à spirale.
2. Démarrer le pétrissage selon le programme suivant :
   * en 1^{ère} vitesse pendant 4 min
   * en 2^{ème} vitesse pendant 5 min.
3. Obtention d'une pâte ayant une température de 24,5°C +/- 0.5°C.
4. Pointage de la masse pendant 20 min.
5. Division en pâtons de 350 g.
6. Façonnage
7. Apprêt en parisien (chambre de pousse en bois) à température ambiante à 23°C.
8. Cuisson dans un four à sole à 215/230°C pendant 32 min.
9. Mesure du volume des pains après un refroidissement d'au moins une heure et appréciation de la note des pains obtenus.

Les tests de panification ont été réalisés :
● soit directement avec les améliorants solides 1 et 2 tels que décrits dans l'exemple 1 à un pourcentage du boulanger de 0,1% (tableau 3, colonne a),
● soit avec les améliorants liquides 1 et 2 correspondants tels que décrits dans l'exemple 2, lesdits améliorants liquides étant utilisés à un pourcentage du boulanger de 1,1%, (tableau 3, colonne b).

Les volumes spécifiques des pains obtenus avec les améliorants liquides ont été comparés avec les volumes spécifiques des pains obtenus avec les améliorants solides correspondants.

Ces tests ont également permis de tester la conservation des améliorants liquides, puisqu'une panification a été réalisée dès constitution de l'améliorant sous forme liquide, et après 24 h et 48 h de conservation à moins de 10°C.

**Tableau 4**

| | Améliorant de composition 1 | Améliorant de composition 2 |
|---|---|---|
| Améliorant solide | T | T |
| A. liquide à T=0h | - 0,5% | - 0,6% |
| A. liquide à T=24h | + 0,2% | - 0,8% |
| A. liquide à T=48h | - 0,9% | - 1,0% |

| | | |
|---|---|---|
| T= témoin | | |

La qualité et les volumes spécifiques des pains français de type bâtard obtenus avec les améliorants 1 et 2 ne sont pas significativement différents quand l'améliorant solide est utilisé en tant que tel où s'il est utilisé sous la forme d'un améliorant liquide obtenu par dispersion de l'améliorant solide dans l'eau, ceci reste vrai après conservation de l'améliorant liquide 48 heures à moins de 10°C.

## Revendications

1. Procédé de préparation dans la boulangerie d'un améliorant liquide de panification, comprenant la dispersion, dans une phase liquide aqueuse, de préférence de l'eau, d'un améliorant solide de panification, ledit améliorant solide :
● ayant une teneur en matières sèches supérieure ou égale à 80% en masse, lesdites matières sèches consistant essentiellement en un ou plusieurs ingrédients alimentaires hydrosolubles et au moins une enzyme ;
●contenant de l'acide ascorbique ;
●donnant après dispersion dans 100 parties en poids d'eau distillée de 10 parties en poids de l'améliorant solide, un liquide ayant un pH de 3,8 à 7,0 ; de préférence de 4,0 à 6,5 ;et encore de préférence de 4,5 à 6,3 ; et préférentiellement de 5,0 à 6,0.

2. Procédé selon la revendication 1, dans lequel l'améliorant solide est sous forme non-pulvérulente, de préférence sous forme granulaire ou sous forme de comprimé.

3. Procédé selon l'une des revendications précédentes, dans lequel l'améliorant solide a au moins l'une des caractéristiques a, b, c et d suivantes :
a) une teneur en matières sèches supérieure ou égale à 90% en masse, de préférence supérieure ou égale à 95% en masse et encore de préférence supérieure ou égale à 97% en masse ;
b) les matières sèches consistent pour au moins 90% en masse, de préférence pour au moins 95% en masse, de préférence pour au moins 97% en masse, encore de préférence pour au moins 99% en masse d'une ou plusieurs enzymes et d'un ou plusieurs ingrédient(s) hydrosoluble(s) ;
c) contient au moins un ingrédient alimentaire hydrosoluble choisi dans le groupe des ingrédients tampons, les ingrédients tampons étant définis comme :
● les sels d'un acide faible avec une base forte,
● les sels d'un acide fort avec une base faible, et
● les combinaisons d'un acide faible avec au moins un de ses sels.
d) 10 parties en poids dudit améliorant solide dispersées dans 100 parties en poids d'eau distillée donnent un liquide ayant un pouvoir tampon tel qu'un ajout de 1 ml d'HCl 1N à 110 g dudit liquide donne une variation de pH inférieure ou égale à 0,50 ; de préférence inférieure ou égale à 0,20 ; encore de préférence inférieure ou égale à 0,10 ; et encore plus de préférence inférieure ou égale à 0,08.

4. Procédé selon la revendication 3, dans lequel l'améliorant solide a au moins deux, de préférence au moins trois des caractéristiques a, b, c et d ; et encore de préférence les quatre caractéristiques a, b, c et d.

5. Procédé selon l'une des revendications précédentes, dans lequel l'améliorant solide contient un ou plusieurs ingrédients alimentaires hydrosolubles choisis dans le groupe des carbonates, des phosphates, des acétates, des lactates, des citrates, des malates, des fumarates, et des propionates.

6. Procédé selon l'une des revendications précédentes, dans lequel l'améliorant solide contient un ou plusieurs ingrédients alimentaires hydrosolubles appartenant au groupe des lactates, acétates et citrates.

7. Procédé selon l'une des revendications précédentes, dans lequel l'améliorant solide contient un ingrédient alimentaire hydrosoluble choisi dans le groupe consistant en l'acétate de calcium et le lactate de calcium, ou une combinaison desdits ingrédients.

8. Procédé selon l'une des revendications précédentes, dans lequel l'améliorant solide comprend au moins une enzyme choisie dans le groupe des amylases, des hémicellulases, des glucose oxydases, des amyloglucosidases, des lipases, des phospholipases, des sulfhydryles oxydases, des protéases, des peroxydases et de préférence comprenant une combinaison desdites enzymes.

9. Procédé selon l'une des revendications précédentes, dans lequel l'améliorant solide comprend au moins une alpha-amylase fongique et bactérienne ou une combinaison desdites alpha-amylases.

10. Procédé selon l'une des revendications précédentes, dans lequel l'améliorant solide comprend au moins une alpha-amylase maltogène.

11. Procédé selon l'une des revendications précédentes, dans lequel l'améliorant solide contient de 0,5 à 3,0% en masse d'alpha-amylase(s) et de 1,0 à 30,0% en masse d'hémicellulase(s) ; de préférence de 1,0 à 2,0% en masse d'alpha-amylase(s) et de 1,2 à 15,0% en masse d'hémicellulase(s).

12. Procédé selon l'une des revendications précédentes, dans lequel l'améliorant solide contient une ou plusieurs alpha-amylase(s) et une ou plusieurs hémicellulase(s), et de préférence également une ou plusieurs glucose oxydase(s) et/ou une ou plusieurs phospholipase(s).

13. Procédé selon l'une des revendications précédentes, dans lequel l'améliorant solide contient de 2 à 30% en masse d'acide ascorbique, de préférence de 5 à 20% en masse, et encore de préférence de 7 à 15% en masse.

14. Procédé selon l'une des revendications précédentes, dans lequel l'améliorant solide comprend du monochlorhydrate de L-cystéïne et/ou du chlorure de sodium.

15. Procédé selon l'une des revendications 1 à 14, dans lequel l'améliorant solide est conditionné dans un emballage réalisé en matières hydrosolubles alimentaires, et l'améliorant liquide est réalisé par dispersion, dans la phase liquide aqueuse, de l'améliorant solide y compris de son emballage hydrosoluble.

16. Procédé selon l'une des revendications précédentes, dans lequel l'améliorant liquide contient de 1 à 25 % en masse, de préférence de 3 à 20% en masse et encore de préférence de 6 à 12% en masse de l'améliorant solide.

17. Procédé de préparation selon l'une quelconque des revendications 1 à 16, dans lequel l'améliorant liquide de panification est préparé en batch.

18. Procédé de préparation d'une pâte pour produit cuit de boulangerie comprenant la préparation d'un améliorant liquide de panification selon l'une des revendications précédentes et l'incorporation d'une quantité dudit améliorant liquide dans la pâte.

19. Procédé de préparation d'une pâte pour produit cuit de boulangerie selon la revendication 18, dans laquelle la pâte est une pâte fermentée de préférence choisie dans le groupe des pâtes à pain, des pâtes pour brioche et des pâtes pour viennoiserie.

20. Procédé pour la préparation d'un produit cuit de boulangerie, procédé comprenant :
● le procédé de préparation d'un améliorant liquide de panification selon l'une des revendications 1 à 17,
● l'incorporation d'une quantité dudit améliorant liquide dans la pâte, et
● la cuisson de la pâte.

21. Procédé selon l'une quelconque des revendications 18 à 20, dans lequel l'améliorant liquide est incorporé dans la pâte en une quantité correspondant à un pourcentage du boulanger de l'améliorant solide de 0,01 à 1,00 ; de préférence de 0,05 à 0,50 ; et encore de préférence de 0,08 à 0, 25.

22. Procédé selon l'une quelconque des revendications 18 à 21, dans lequel l'améliorant liquide est utilisé pendant une durée de 24h et de préférence pendant 48h suivant sa préparation.

23. Procédé selon l'une quelconque des revendications 18 à 22, dans lequel l'améliorant liquide à moins de 10°C entre sa préparation et son incorporation dans une pâte.

24. Améliorant solide de panification tel que défini dans l'une quelconque des revendications 1 à 15.

25. Améliorant solide de panification selon la revendication 24 donnant après dispersion dans 100 parties en poids d'eau distillée de 10 parties en poids de l'améliorant solide, un liquide ayant un pH de 4,5 à 6,3 ; et préférentiellement de 5,0 à 6,0.

26. Améliorant solide de panification selon la revendication 24 ou 25, **caractérisé en ce qu'**il a au moins l'une des caractéristiques a, b, c et d suivantes :
a) une teneur en matières sèches supérieure ou égale à 90% en masse, de préférence supérieure ou égale à 95% en masse et encore de préférence supérieure ou égale à 97% en masse ;
b) les matières sèches consistent pour au moins 90% en masse, de préférence pour au moins 95% en masse, de préférence pour au moins 97% en masse, encore de préférence pour au moins 99% en masse d'une ou plusieurs enzymes et d'un ou plusieurs ingrédient(s) hydrosoluble(s) ;
c) contient au moins un ingrédient alimentaire hydrosoluble choisi dans le groupe des ingrédients tampons, les ingrédients tampons étant définis comme :
● les sels d'un acide faible avec une base forte,
● les sels d'un acide fort avec une base faible, et
● les combinaisons d'un acide faible avec au moins un de ses sels.
d) 10 parties en poids dudit améliorant solide dispersées dans 100 parties en poids d'eau distillée donnent un liquide ayant un pouvoir tampon tel qu'un ajout de 1 ml d'HCl 1N à 110 g dudit liquide donne une variation de pH inférieure ou égale à 0,50 ; de préférence inférieure ou égale à 0,20 ; encore de préférence inférieure ou égale à 0,10 ; et encore plus de préférence inférieure ou égale à 0,08.

27. Améliorant solide de panification selon l'une des revendications 24 à 26, **caractérisé en ce qu'**il est sous forme non-pulvérulente, de préférence sous forme granulaire, ou sous forme de comprimé.

28. Améliorant solide selon la revendication 27, **caractérisé en ce que** le diamètre moyen des particules de l'améliorant est compris entre 50 µm et 1000 µm, de préférence entre 80 µm et 700 µm et encore de préférence entre 80 µm et 300 µm.

29. Améliorant solide selon l'une des revendications 24 à 28, **caractérisé en ce que** la quantité de particules fines ayant un diamètre inférieur à 50 µm correspond à moins de 30% en masse, de préférence à moins de 15% et encore de préférence à moins de 5% en masse de l'améliorant solide.

30. Utilisation d'un améliorant solide selon l'une des revendications 24 à 29 dans la préparation dans la boulangerie d'un améliorant liquide selon le procédé décrit dans l'une des revendications 1 à 16.

## Claims

1. Method of preparing a liquid bread-making improver in the bakery, comprising dispersing a solid bread-making improver in an aqueous liquid phase, preferably water, said solid improver:
● having a dry matter content greater than or equal to 80% by mass, said dry matter essentially consisting of one or more water-soluble food ingredients and at least one enzyme;
● containing ascorbic acid;
● resulting, after dispersing 10 parts by weight of solid improver in 100 parts by weight of distilled water, in a liquid with a pH of 3.8 to 7.0, preferably 4.0 to 6.5, and even more preferably 4.5 to 6.3, and preferentially 5.0 to 6.0.

2. Method as claimed in claim 1, wherein the solid improver is in non-powdered form, being preferably in granular form or tablet form.

3. Method as claimed in one of the preceding claims, wherein the solid improver has at least one of the following characteristics a, b, c and d:
a) a dry matter content greater than or equal to 90% by mass, preferably greater than or equal to 95% by mass and even more preferably greater than or equal to 97% by mass;
b) the dry matter consists of at least 90% by mass, preferably at least 95% by mass, preferably at least 97% by mass, even more preferably at least 99% by mass, of one or more enzymes and one or more water-soluble ingredient(s);
c) contains at least one water-soluble food ingredient selected from the group of buffer ingredients, buffer ingredients being defined as:
● salts of a weak acid with a strong base,
● salts of a strong acid with a weak base, and
● combinations of a weak acid with at least one of its salts,
d) 10 parts by weight of said solid improver dispersed in 100 parts by weight of distilled water result in a liquid with a buffering power such that adding 1 ml of HCl 1 N to 110 g of said liquid results in a variation in pH of less than or equal to 0.50, preferably less than or equal to 0.20, more preferably less than or equal to 0.10, and even more preferably less than or equal to 0.08.

4. Method as claimed in claim 3, wherein the solid improver has at least two, preferably at least three of characteristics a, b, c and d and more preferably all four characteristics a, b, c and d.

5. Method as claimed in one of the preceding claims, wherein the solid improver contains one or more water-soluble food ingredients selected from the group of carbonates, phosphates, acetates, lactates, citrates, malates, fumarates and propionates.

6. Method as claimed in one of the preceding claims, wherein the solid improver contains one or more water-soluble food ingredients belonging to the group of lactates, acetates and citrates.

7. Method as claimed in one of the preceding claims, wherein the solid improver contains a water-soluble food ingredient selected from the group consisting of calcium acetate and calcium lactate, or a combination of said ingredients.

8. Method as claimed in one of the preceding claims, wherein the solid improver contains at least one enzyme selected from the group of amylases, hemicellulases, glucose oxydases, amyloglucosidases, lipases, phospholipases, sulfhydryl oxydases, proteases, peroxydases and preferably contains a combination of said enzymes.

9. Method as claimed in one of the preceding claims, wherein the solid improver contains at least one fungal and bacterial alpha-amylase or a combination of said alpha-amylases.

10. Method as claimed in one of the preceding claims, wherein the solid improver contains at least one maltogen alpha-amylase.

11. Method as claimed in one of the preceding claims, wherein the solid improver contains 0.5 to 3.0% by mass of alpha-amylase(s) and 1.0 to 30.0% by mass of hemicellulase(s); preferably 1.0 to 2.0% by mass of alpha-amylase(s) and 1.2 to 15.0% by mass of hemicellulase(s).

12. Method as claimed in one of the preceding claims, wherein the solid improver contains one or more alpha-amylase(s) and one or more hemicellulase(s), and preferably also one or more glucose oxydase(s) and/or one or more phospholipase(s).

13. Method as claimed in one of the preceding claims, wherein the solid improver contains 2 to 30% by mass of ascorbic acid, preferably 5 to 20% by mass and even more preferably 7 to 15% by mass.

14. Method as claimed in one of the preceding claims, wherein the solid improver contains L-cysteine monochlorohydrate and/or sodium chloride.

15. Method as claimed in one of claims 1 to 14, wherein the solid improver is packaged in a packaging made from water-soluble food materials and the liquid improver is made by dispersing the solid improver, including its water-soluble packaging, in the aqueous liquid phase.

16. Method as claimed in one of the preceding claims, wherein the liquid improver contains 1 to 25% by mass, preferably 3 to 20% by mass and even more preferably 6 to 12% by mass of the solid improver.

17. Preparation method as claimed in any one of claims 1 to 16, wherein the liquid bread-making improver is prepared in batches.

18. Method of preparing a dough for baked products comprising preparing a liquid bread-making improver as claimed in one of the preceding claims and incorporating a quantity of said liquid improver in the dough.

19. Method of preparing a dough for baked products as claimed in claim 18, wherein the dough is a fermented dough, preferably selected from the group comprising bread doughs, brioche doughs and Viennese pastry doughs.

20. Method of preparing a baked product, wherein said method comprises:
● the method of preparing a liquid bread-making improver as claimed in one of claims 1 to 17,
● incorporating a quantity of the liquid improver in the dough, and
● baking the dough.

21. Method as claimed in any one of claims 18 to 20, wherein the liquid improver is incorporated in the dough in a quantity corresponding to a baker's percentage of solid improver of 0.01 to 1.00, preferably 0.05 to 0.50, and even more preferably 0.08 to 0.25.

22. Method as claimed in any one of claims 18 to 21, wherein the liquid improver is used during a period of 24h and preferably 48h after its preparation.

23. Method as claimed in any one of claims 18 to 22, wherein the liquid improver is stored at less than 10°C between its preparation and its incorporation in a dough.

24. Solid bread-making improver as defined in any one of claims 1 to 15.

25. Solid bread-making improver as claimed in claim 24, resulting, after dispersing 10 parts by weight of solid improver in 100 parts by weight of distilled water, in a liquid having a pH of 4.5 to 6.3, and preferentially 5.0 to 6.0.

26. Solid bread-making improver as claimed in claim 24 or 25, **characterised in that** it has at least one of the following characteristics a, b, c and d:
a) a dry matter content greater than or equal to 90% by mass, preferably greater than or equal to 95% by mass and even more preferably greater than or equal to 97% by mass;
b) the dry matter consists of at least 90% by mass, preferably at least 95% by mass, preferably at least 97% by mass, even more preferably at least 99% by mass, of one or more enzymes and one or more water-soluble ingredient(s);
c) contains at least one water-soluble food ingredient selected from the group of buffer ingredients, buffer ingredients being defined as:
● the salts of a weak acid with a strong base,
● the salts of a strong acid with a weak base, and
● combinations of a weak acid with at least one of its salts,
d) 10 parts by weight of said solid improver dispersed in 100 parts by weight of distilled water result in a liquid with a buffering capacity such that adding 1 ml of HCl 1 N to 110 g of said liquid results in a variation in pH less than or equal to 0.50, preferably less than or equal to 0.20, more preferably less than or equal to 0.10, and even more preferably less than or equal to 0.08.

27. Solid bread-making improver as claimed in one of claims 24 to 26, **characterised in that** it is in non-powdered form, being preferably in granular form or in tablet form.

28. Solid bread-making improver as claimed in claim 27, **characterised in that** the mean diameter of the particles of the improver is between 50 µm and 1000 µm, preferably between 80 µm and 700 µm and even more preferably between 80 µm and 300 µm.

29. Solid improver as claimed in one of claims 24 to 28, **characterised in that** the quantity of fine particles with a diameter of less than 50 µm corresponds to at least 30% by mass, preferably at least 15% and even more preferably at least 5% by mass of the solid improver.

30. Use of a solid improver as claimed in one of claims 24 to 29 to prepare in the bakery a liquid improver based on the method described in one of claims 1 to 16.

## Patentansprüche

1. Verfahren zur Herstellung eines flüssigen Backverbesserers zur Brotherstellung im Backwesen, umfassend das Dispergieren eines festen Backverbesserers in einer wässrigen Flüssigphase, vorzugsweise Wasser, wobei dieser feste Backverbesserer:
● einen Trockenmassegehalt grösser oder gleich 80 Gewichtsprozent aufweist, wobei diese Trockenmasse im Wesentlichen aus einem oder mehreren wasserlöslichen Lebensmittelzusatzstoffen und mindestens einem Enzym besteht;
● Ascorbinsäure enthält;
● nach Dispergieren von 10 Gewichtsteilen des festen Backverbesserers in 100 Gewichtsteilen destilliertem Wasser eine Flüssigkeit ergibt, welche einen pH-Wert von 3,8 bis 7,0, vorzugsweise von 4,0 bis 6,5, und besonders bevorzugt von 4,5 bis 6,3, und am meisten bevorzugt von 5,0 bis 6,0 aufweist.

2. Verfahren nach Anspruch 1, wobei der feste Backverbesserer nicht pulverförmig ist und vorzugsweise in Form von Granulat oder in gepresster Form ist.

3. Verfahren nach einem der vorangehenden Ansprüche, wobei der feste Backverbesserer mindestens eine der folgenden Eigenschaften a, b, c und d aufweist:
(a) einen Trockenmassegehalt grösser oder gleich 90 Gewichtsprozent, vorzugsweise grösser oder gleich 95 Gewichtsprozent und besonders bevorzugt grösser oder gleich 97 Gewichtsprozent;
(b) die Trockenmasse besteht aus mindestens 90 Gewichtsprozent, vorzugsweise aus mindestens 95 Gewichtsprozent, besonders bevorzugt aus mindestens 97 Gewichtsprozent, am meisten bevorzugt aus mindestens 99 Gewichtsprozent eines oder mehrerer Enzyme und eines oder mehrerer wasserlöslicher Zusatzstoff(e);
(c) er enthält mindestens einen wasserlöslichen Lebensmittelzusatzstoff, welcher aus der Gruppe der Puffersubstanzen ausgewählt ist, wobei die Puffersubstanzen wie folgt definiert werden:
● Salze einer schwachen Säure mit einer starken Base,
● Salze einer starken Säure mit einer schwachen Base, und
● Kombinationen einer schwachen Säure mit mindestens einem dieser Salze.
(d) das Dispergieren von 10 Gewichtsteilen des festen Backverbesserers in 100 Gewichtsteilen destilliertem Wasser eine Flüssigkeit ergibt, welche eine Pufferstärke hat, sodass die Zugabe von 1 mL 1 N HCl zu 110 g der Flüssigkeit eine Änderung des pH-Wertes von weniger oder gleich 0,50; vorzugsweise weniger oder gleich 0,20; besonders bevorzugt weniger oder gleich 0,10; am meisten bevorzugt weniger oder gleich 0,08 bewirkt.

4. Verfahren nach Anspruch 3, wobei der feste Backverbesserer mindestens zwei, vorzugsweise mindestens drei der Eigenschaften a, b, c und d, besonders bevorzugt die vier Eigenschaften a, b, c und d, aufweist.

5. Verfahren nach einem der vorangehenden Ansprüche, wobei der feste Backverbesserer einen oder mehrere wasserlösliche Lebensmittelzusatzstoffe umfasst, welche aus der Gruppe der Carbonate, der Phosphate, der Acetate, der Lactate, der Citrate, der Malate, der Fumarate, und der Propionate ausgewählt werden.

6. Verfahren nach einem der vorangehenden Ansprüche, wobei der feste Backverbesserer einen oder mehrere wasserlösliche Lebensmittelzusatzstoffe umfasst, welche zu der Gruppe der Lactate, der Acetate und der Citrate gehören.

7. Verfahren nach einem der vorangehenden Ansprüche, wobei der feste Backverbesserer einen wasserlöslichen Lebensmittelzusatzstoff umfasst, welcher aus der Gruppe, bestehend aus Kalziumacetat und Kalziumlactat, oder einer Kombination dieser Substanzen, ausgewählt wird.

8. Verfahren nach einem der vorangehenden Ansprüche, wobei der feste Backverbesserer mindestens ein Enzym umfasst, welches aus der Gruppe Amylasen, Hemicellulasen, Glukoseoxidasen, Amyloglucosidasen, Lipasen, Phospholipasen, Sulfhydryloxidasen, Proteasen, Peroxidasen ausgewählt wird, und vorzugsweise eine Kombination dieser Enzyme umfasst.

9. Verfahren nach einem der vorangehenden Ansprüche, wobei der feste Backverbesserer mindestens eine fungoide und bakterielle Alpha-Amylase oder eine Kombination dieser Alpha-Amylasen umfasst.

10. Verfahren nach einem der vorangehenden Ansprüche, wobei der feste Backverbesserer mindestens eine maltogene Alpha-Amylase umfasst.

11. Verfahren nach einem der vorangehenden Ansprüche, wobei der feste Backverbesserer 0,5 bis 3,0 Gewichtsprozent der Alpha-Amylase(n) und 1,0 bis 30,0 Gewichtsprozent der Hemicellulase(n), vorzugsweise 1,0 bis 2,0 Gewichtsprozent der Alpha-Amylase(n) und 1,2 bis 15,0 Gewichtsprozent der Hemicellulase(n) umfasst.

12. Verfahren nach einem der vorangehenden Ansprüche, wobei der feste Backverbesserer eine oder mehrere Alpha-Amylase(n) und eine oder mehrere Hemicellulase(n), vorzugsweise auch eine oder mehrere Glucoseoxidase(n) und/oder eine oder mehrere Phospholipase(n) umfasst.

13. Verfahren nach einem der vorangehenden Ansprüche, wobei der feste Backverbesserer von 2 bis 30 Gewichtsprozent Ascorbinsäure, vorzugsweise von 5 bis 20 Gewichtsprozent, und besonders bevorzugt von 7 bis 15 Gewichtsprozent umfasst.

14. Verfahren nach einem der vorangehenden Ansprüche, wobei der feste Backverbesserer ein Monochlorhydrat von L-Cystein und/oder Natriumchlorid umfasst.

15. Verfahren nach einem der Ansprüche 1 bis 14, wobei der feste Backverbesserer in einer Umhüllung verpackt ist, welche aus wasserlöslichen Lebensmittelzusatzstoffen hergestellt ist, und der flüssige Backverbesserer durch Dispergieren des festen Backverbesserers zusammen mit der wasserlöslichen Umhüllung in einer wässrigen Flüssigphase hergestellt wird.

16. Verfahren nach einem der vorangehenden Ansprüche, wobei der flüssige Backverbesserer 1 bis 25 Gewichtsprozent, vorzugsweise 3 bis 20 Gewichtsprozent und besonders bevorzugt 6 bis 12 Gewichtsprozent des festen Backverbesserers enthält.

17. Verfahren nach einem der Ansprüche 1 bis 16, wobei der flüssige Backverbesserer zur Brotherstellung chargenweise hergestellt wird.

18. Verfahren zur Herstellung eines Teiges als Backprodukt im Backwesen umfassend die Herstellung eines flüssigen Backverbesserers zur Brotherstellung nach einem der vorangehenden Ansprüche und Beimischung einer Menge dieses flüssigen Backverbesserers zum Teig.

19. Verfahren zur Herstellung eines Teiges als Backprodukt im Backwesen nach Anspruch 18, wobei der Teig ein gärender Teig ist, vorzugsweise ausgewählt aus der Gruppe der Brotteige, der Briocheteige und der Backwaren.

20. Verfahren zur Herstellung eines Backproduktes im Backwesen, wobei das Verfahren umfasst:
● das Verfahren zur Herstellung eines flüssigen Backverbesserers zur Brotherstellung nach Ansprüchen 1 bis 17,
● die Zugabe einer Menge dieses flüssigen Backverbesserers zum Teig, und
● das Backen des Teiges.

21. Verfahren nach einem der Ansprüche 18 bis 20, wobei der flüssige Backverbesserer zum Teig in einer Menge entsprechend einer Bäcker-Prozentangabe des festen Backverbesserers von 0,01 bis 1,00, vorzugsweise von 0,05 bis 0,50, und besonders bevorzugt von 0,08 bis 0,25 zugegeben wird.

22. Verfahren nach einem der Ansprüche 18 bis 21, wobei der flüssige Backverbesserer innerhalb einer Dauer von 24 Stunden, vorzugsweise innerhalb 48 Stunden nach seiner Herstellung verwendet wird.

23. Verfahren nach einem der Ansprüche 18 bis 22, wobei der flüssige Backverbesserer weniger als 10°C zwischen seiner Herstellung und seiner Zugabe zum Teig hat.

24. Fester Backverbesserer zur Brotherstellung wie nach einem der Ansprüche 1 bis 15 definiert.

25. Fester Backverbesserer zur Brotherstellung nach Anspruch 24, welcher nach Dispergieren von 10 Gewichtsteilen des festen Backverbesserers in 100 Gewichtsteilen destilliertem Wasser, eine Flüssigkeit ergibt, welche einen pH-Wert von 4,5 bis 6,3, vorzugsweise von 5,0 bis 6,0 aufweist.

26. Fester Backverbesserer zur Brotherstellung nach Anspruch 24 oder 25, **dadurch gekennzeichnet, dass** er mindestens eine der folgenden Eigenschaften a, b, c und d aufweist:
(a) einen Trockenmassegehalt grösser oder gleich 90 Gewichtsprozent, vorzugsweise grösser oder gleich 95 Gewichtsprozent und besonders bevorzugt grösser oder gleich 97 Gewichtsprozent;
(b) die Trockenmasse besteht aus mindestens 90 Gewichtsprozent, vorzugsweise aus mindestens 95 Gewichtsprozent, besonders bevorzugt aus mindestens 97 Gewichtsprozent, am meisten bevorzugt aus mindestens 99 Gewichtsprozent eines oder mehrerer Enzyme und eines oder mehrerer wasserlöslicher Zusatzstoff(e);
(c) er enthält mindestens einen wasserlöslichen Lebensmittelzusatzstoff, welcher aus der Gruppe der Puffersubstanzen ausgewählt ist, wobei die Puffersubstanzen wie folgt definiert werden:
● Salze einer schwachen Säure mit einer starken Base,
● Salze einer starken Säure mit einer schwachen Base, und
● Kombinationen einer schwachen Säure mit mindestens einem dieser Salze;
(d) das Dispergieren von 10 Gewichtsteilen des festen Backverbesserers in 100 Gewichtsteilen destilliertem Wasser eine Flüssigkeit ergibt, welche eine Pufferstärke hat, sodass die Zugabe von 1 mL 1 N HCl zu 110 g der Flüssigkeit eine Änderung des pH-Wertes von weniger oder gleich 0,50; vorzugsweise weniger oder gleich 0,20; besonders bevorzugt weniger oder gleich 0,10; am meisten bevorzugt weniger oder gleich 0,08 bewirkt.

27. Fester Backverbesserer zur Brotherstellung nach einem der Ansprüche 24 bis 26, **dadurch gekennzeichnet, dass** er nicht pulverförmig ist und vorzugsweise in Form von Granulat oder in gepresster Form ist.

28. Fester Backverbesserer nach Anspruch 27, **dadurch gekennzeichnet, dass** der mittlere Durchmesser der Partikel des Verbesserers zwischen 50 µm und 1000 µm, vorzugsweise zwischen 80 µm und 700 µm und besonders bevorzugt zwischen 80 µm und 300 µm, liegt.

29. Fester Backverbesserer nach einem der Ansprüche 24 bis 28, **dadurch gekennzeichnet, dass** die Menge von feinen Partikeln, welche einen Durchmesser weniger als 50 µm aufweisen, weniger als 30 Gewichtsprozent, vorzugsweise weniger als 15 Gewichtsprozent und besonders bevorzugt weniger als 5 Gewichtsprozent des festen Backverbesserers entsprechen.

30. Verwendung eines festen Backverbesserers nach einem der Ansprüche 24 bis 29 zur Herstellung eines flüssigen Backverbesserers im Backwesen nach dem Verfahren gemäß einem der Ansprüche 1 bis 16.
